# EUROPÄISCHE PATENTSCHRIFT

(11) **EP 1 108 610 B1**
(45) Veröffentlichungstag und Bekanntmachung des Hinweises auf die Patenterteilung: **17.05.2006**
(21) Anmeldenummer: 00126812.7
(22) Anmeldetag: 07.12.2000
(51) Int. Cl.: B60Q 1/04, F21V 23/02

(54) **Beleuchtungsvorrichtung**
Lighting device
Dispositif d'éclairage

(30) Priorität: 13.12.1999 DE 19960121
(43) Veröffentlichungstag der Anmeldung: 20.06.2001
(73) Patentinhaber: MTM Power Messtechnik Mellenbach GmbH, 98746 Mellenbach (DE)
(72) Erfinder: Kraus, Hilmar, 60431 Frankfurt (DE)
(74) Vertreter: Naumann, Ulrich

(56) Entgegenhaltungen:
- EP-A- 0 325 205
- EP-A- 0 544 998
- EP-A- 0 854 315
- WO-A-95/09322
- DE-A- 4 302 104
- FR-A- 2 526 258
- US-A- 4 598 347
- US-A- 5 597 232
- US-A- 5 757 624
- US-A- 5 865 531

## Beschreibung

Die Erfindung betrifft eine Beleuchtungsvorrichtung, insbesondere zum Betrieb mit Niederspannung, mit einem Gehäuse, einem dem Gehäuse zugeordneten Leuchtmittel und einem mit dem Leuchtmittel elektrisch verbundenen Wandler zur Wandlung einer Eingangsspannung in eine Betriebsspannung des Leuchtmittels.

Beleuchtungsvorrichtungen der in Rede stehenden Art sind seit langem aus der Praxis bekannt und existieren in den unterschiedlichsten Ausführungsformen und Größen. Derartige Beleuchtungsvorrichtungen werden häufig an elektrisch betriebenen Flurförderfahrzeugen verwendet. Dabei handelt es sich meist um Beleuchtungsvorrichtungen, die mit 12 Volt Gleichspannung betrieben werden. Die Beleuchtungsvorrichtungen weisen ein Gehäuse auf, dem ein Leuchtmittel zugeordnet ist. Mit dem Leuchtmittel ist ein Wandler elektrisch verbunden, der die Eingangsspannung, beispielsweise eine Spannung des Bordnetzes eines Flurförderfahrzeugs, in die Betriebsspannung von 12 Volt Gleichspannung des Leuchtmittels wandelt. Eine übliche Eingangsspannung beträgt 36 Volt oder 48 Volt Gleichspannung. Der Wandler ist bei einem typischen Flurförderfahrzeug außerhalb des Gehäuses an einer geeigneten Stelle im Fahrzeug angeordnet.

Bei der bekannten Beleuchtungsvorrichtung ist problematisch, dass eine Nachrüstung eines Fahrzeugs mit der Beleuchtungsvorrichtung aufwendig ist, da einerseits der Wandler an einer geeigneten Stelle im Fahrzeug und andererseits das Gehäuse mit dem Leuchtmittel an der vorgesehenen Position am Fahrzeug angeordnet werden müssen. Damit sind zwei Komponenten an unterschiedlichen Stellen im bzw. am Fahrzeug zu installieren. Des weiteren ist bei der bekannten Beleuchtungsvorrichtung nachteilig, dass der Wandler Raum im Fahrzeug beansprucht. Dies hat insbesondere bei kleinen Fahrzeugen eine oft merkbare Beeinträchtigung des Platzangebots im Fahrzeug zur Folge. Eine Beleuchtungsvorrichtung mit dem in Gehäuse zugeordneten wandler ist aus US 5865531 bekannt.

Der vorliegenden Erfindung liegt die Aufgabe zugrunde, eine Beleuchtungsvorrichtung der eingangs genannten Art anzugeben, bei der eine einfache Installation an einem Fahrzeug in platzsparender Weise mit konstruktiv einfachen Mitteln ermöglicht ist.

Die zuvor aufgezeigte Aufgabe ist durch eine Beleuchtungsvorrichtung mit den Merkmalen des Patentanspruchs 1 gelöst.

Es ist erkannt worden, dass die Zuordnung des Wandlers zu dem Gehäuse die obige Aufgabe auf überraschend einfache Weise löst. Hierdurch ist einerseits der Installationsaufwand erheblich reduziert, da lediglich das Gehäuse - mit dem Leuchtmittel und dem Wandler - an der vorgesehenen Position am Fahrzeug zu installieren ist. Die separate Installation des Wandlers im Fahrzeug entfällt hierbei. Andererseits beansprucht der Wandler im Fahrzeug selbst keinen Platz mehr, so dass hier ein Raumgewinn die Folge ist. Dies bringt insbesondere bei kleineren Fahrzeugen erhebliche Vorteile hinsichtlich der Bequemlichkeit und der Möglichkeit, andere Funktionseinheiten im Fahrzeug zu installieren.

Folglich ist mit der erfindungsgemäßen Beleuchtungsvorrichtung eine Beleuchtungsvorrichtung angegeben, bei der eine einfache Installation an einem Fahrzeug - insbesondere zu Nachrüstzwecken - in platzsparender Weise mit konstruktiv einfachen Mitteln ermöglicht ist.

Im konkreten könnte der Wandler dem hinteren, dem Leuchtmittel abgewandten Bereich des Gehäuses zugeordnet sein. Eine derartige Zuordnung ist hinsichtlich der Temperaturverteilung bezüglich des Gehäuses günstig, da das Leuchtmittel das Gehäuse im Bereich des Leuchtmittels üblicherweise aufheizt und der Wandler auf diese Weise einem kühleren Bereich des Gehäuses zugeordnet ist. Hierdurch wird einer Erwärmung des Wandlers entgegengewirkt.

Im Hinblick auf eine besonders kompakte Ausgestaltung der Beleuchtungsvorrichtung ist der Wandler in dem Gehäuse angeordnet sein. In diesem Sinne könnte der Wandler alternativ oder zusätzlich zu einer Anordnung im Gehäuse integral mit dem Gehäuse ausgebildet sein. Erfindungsgemäß ist der der Wandler mit dem Gehäuse vergossen sein.

Der Wandler könnte ein Gleichspannungs-Gleichspannungs-Wandler sein. Damit könnten üblicherweise in Bordnetzen vorgesehene Spannungen von 36 Volt oder 48 Volt Gleichspannung in eine geeignete Niederspannung von 12 Volt Gleichspannung transformiert werden. Diesbezüglich könnte der Wandler ein Step-Down-Wandler sein.

Zur Abschirmung der hohen Transienten aus dem Bordnetz und zur Entstörung könnte der Wandler einen Eingangsfilter aufweisen. Des weiteren könnte der Wandler einen Speicherkondensator aufweisen.

Weiterhin könnte der Wandler einen Schalter aufweisen, der vorzugsweise in Form eines Feldeffekt-Transistors ausgebildet sein könnte. Weiterhin könnte der Wandler eine Freilauf-Diode und/oder eine Speicherdrossel aufweisen.

Im Hinblick auf eine Glättung der Ausgangsspannung und zur Entstörung könnte der Wandler einen Ausgangsfilter aufweisen. Schließlich könnte der Wandler eine Regelung aufweisen, die vorzugsweise mit den Komponenten Schalter, Freilauf-Diode, Speicherdrossel und Ausgangsfilter zusammenwirkt.

Der Wandler könnte derart ausgebildet sein, dass die Eingangsspannung zwischen 24 und 60 Volt Gleichspannung betragen kann. Weiterhin könnte der Wandler derart leistungsfähig ausgebildet sein, dass die Eingangsspannung kurzzeitig - bis zu einer Stunde - bis zu 90 Volt Gleichspannung betragen kann.

Die Ausgangsspannung des Wandlers könnte in vorteilhafter Weise 12,2 Volt Gleichspannung betragen. Hierdurch sind handelsübliche 12 Volt-Leuchtmittel betreibbar.

Der Wandler ist kurzschlussfest ausgebildet und arbeitet mit einem Wirkungsgrad von über 87%.

Ein in dem Gehäuse angeordnetes Leuchtmittel - insbesondere ein Halogen-Leuchteinsatz - erzeugt eine erhebliche Wärmemenge im Gehäuse, was eine hohe Temperatur in dem Gehäuse zur Folge hat. Zur Vermeidung einer Überhitzung der Beleuchtungsvorrichtung und insbesondere des Wandlers könnte eine Kühleinrichtung vorgesehen sein. Dabei könnte die Kühleinrichtung in besonders wirkungsvoller Weise dem Gehäuse zugeordnet sein.

Zur effektiven Kühlung des Wandlers könnte die Kühleinrichtung an den Wandler angekoppelt sein. In diesem Sinn könnte die Kühleinrichtung dem hinteren, dem Leuchtmittel abgewandten Bereich des Gehäuses zugeordnet sein. Im konkreten könnte die Kühleinrichtung in das Gehäuse, vorzugsweise das Gehäusehinterteil integriert sein. Hierdurch ist die erforderliche Wärmeabfuhr gewährleistet.

In besonders praktischer Weise könnte die Kühleinrichtung ein Kühlkörper sein. Hierbei ist insbesondere ein Rippenkühlkörper vorteilhaft, da dieser ein einfach herzustellendes Bauteil bildet.

Die obigen Maßnahmen sowie eine sorgfältige Auswahl der Bauelemente hinsichtlich ihrer Temperaturverträglichkeit gewährleisten eine einwandfreie Funktion der Beleuchtungsvorrichtung in einem Temperaturbereich von -35°C bis 45°C und sichern eine hohe Lebensdauer.

In einer konkreten Ausgestaltung könnte das Gehäuse einen Reflektor und eine Streuscheibe aufweisen. Dabei könnte das Leuchtmittel in dem Gehäuse angeordnet sein und mit 12 Volt Gleichspannung betreibbar sein. Zur Sicherstellung einer hohen Lichtausbeute könnte das Leuchtmittel eine Halogenleuchte mit vorzugsweise einer Leistung von 55 Watt sein.

Bei der erfindungsgemäßen Beleuchtungsvorrichtung erfolgt die Versorgung der Beleuchtungsvorrichtung mit der Bordnetzspannung des Fahrzeugs in energetisch günstiger Weise. Die relativ zur Betriebsspannung des Leuchtmittels üblicherweise höhere Bordnetzspannung hat auf der Zuleitung zum Gehäuse bzw. zum Wandler der Beleuchtungsvorrichtung einen geringeren Strom und einen kleineren Spannungsabfall zur Folge, woraus sich eine wesentlich geringere Verlustleistung ergibt.

Es gibt nun verschiedene Möglichkeiten, die Lehre der vorliegenden Erfindung in vorteilhafter Weise auszugestalten und weiterzubilden. Dazu ist einerseits auf die nachgeordneten Ansprüche, andererseits auf die nachfolgende Erläuterung eines bevorzugten Ausführungsbeispiels der erfindungsgemäßen Beleuchtungsvorrichtung anhand der Zeichnung zu verweisen. In Verbindung mit der Erläuterung des bevorzugten Ausführungsbeispiels der erfindungsgemäßen Beleuchtungsvorrichtung anhand der Zeichnung werden auch im allgemeinen bevorzugte Ausgestaltungen und Weiterbildungen der Lehre erläutert. In der Zeichnung zeigen
- Fig. 1: in einer Seitenansicht das Ausführungsbeispiel einer erfindungsgemäßen Beleuchtungsvorrichtung,
- Fig. 2: in einer Vorderansicht das Ausführungsbeispiel aus Fig. 1 und
- Fig. 3: in einem Blockschaltbild das Ausführungsbeispiel aus Fig. 1 mit integriertem Wandler.

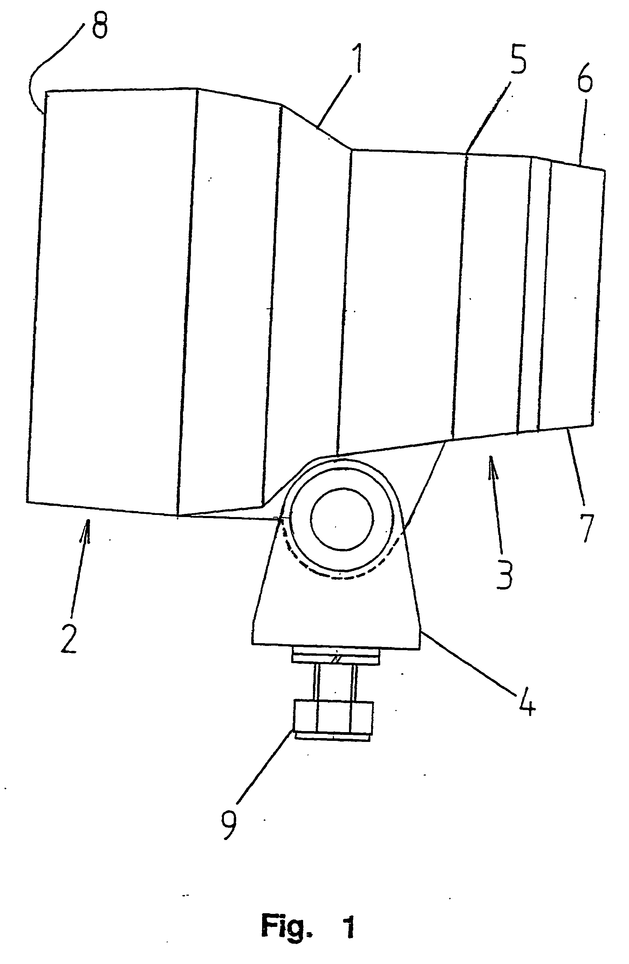

Fig. 1 zeigt in einer Seitenansicht das Ausführungsbeispiel einer erfindungsgemäßen Beleuchtungsvorrichtung. Die Beleuchtungsvorrichtung ist zum Betrieb mit Niederspannung ausgebildet und weist ein Gehäuse 1 und ein dem Gehäuse 1 zugeordnetes Leuchtmittel 2 auf. Das Leuchtmittel 2 ist mit einem Wandler 3 elektrisch verbunden. Der Wandler 3 wandelt eine Eingangsspannung in eine Betriebsspannung des Leuchtmittels 2 um. Im Hinblick auf eine einfache und platzsparende Installation an einem Fahrzeug ist der Wandler 3 dem Gehäuse 1 zugeordnet. Hierdurch fällt eine zusätzliche Installation des Wandlers 3 im Fahrzeug weg. Es muss lediglich die Beleuchtungsvorrichtung - gemeinsam mit dem Wandler 3 - am Fahrzeug angeordnet werden.

Das Leuchtmittel 2 ist eine mit 12 Volt Gleichspannung betreibbare Halogenleuchte, die in dem Gehäuse 1 angeordnet ist. Das Gehäuse 1 ist mit einem Halter 4 gekoppelt, der zur Anordnung am Fahrzeug dient. Das Gehäuse 1 ist relativ zum Halter 4 verschwenkbar.

Der Wandler 3 ist dem hinteren, dem Leuchtmittel 2 abgewandten Bereich 5 des Gehäuses 1 zugeordnet. Dadurch wird das Aufheizen des Wandlers 3 durch das große Wärmemengen abstrahlende Leuchtmittel 2 reduziert.

Genauer gesagt ist der Wandler 3 in dem Gehäuse 1 angeordnet, wobei der Wandler 3 mit dem Gehäuse 1 vergossen ist.

Zur Kühlung des Wandlers 3 ist eine Kühleinrichtung 6 vorgesehen. Die Kühleinrichtung 6 ist dem Gehäuse 1 zugeordnet und an den Wandler 3 angekoppelt. Die Kühleinrichtung 6 ist dem hinteren, dem Leuchtmittel 2 abgewandten Bereich 5 des Gehäuses 1 zugeordnet und dabei in das Gehäuse 1 integriert. Im konkreten ist die Kühleinrichtung 6 ein Rippenkühlkörper 7.

Dem Leuchtmittel ist ein Reflektor zugeordnet. Das Gehäuse 1 weist eine Streuscheibe 8 auf.

Zur Anordnung der Beleuchtungsvorrichtung am Fahrzeug ist dem Halter 4 ein Befestigungsmittel 9 zugeordnet. Hierdurch ist eine einfache und platzsparende Installation der gesamten Beleuchtungsvorrichtung am Fahrzeug möglich.

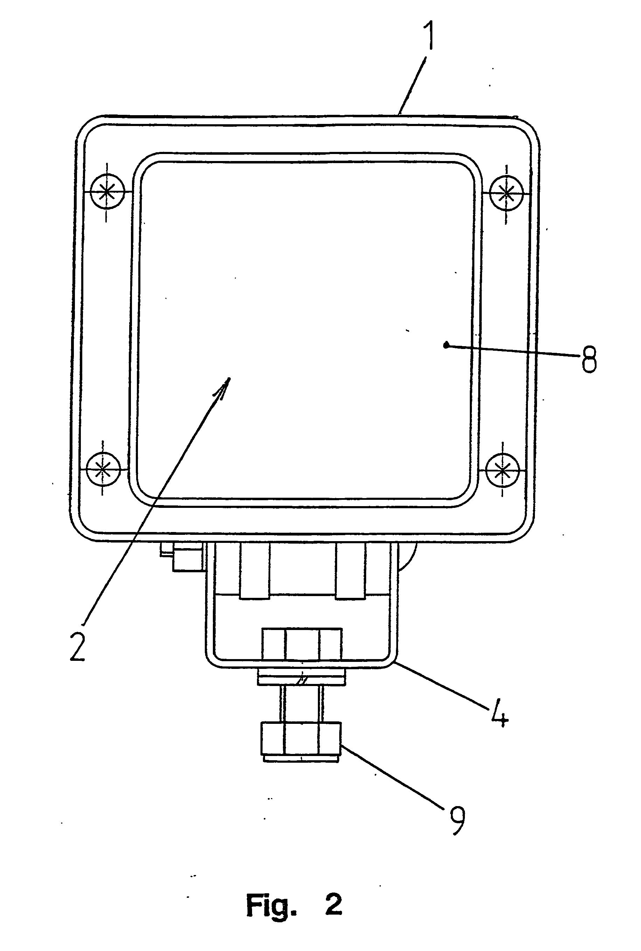

Fig. 2 zeigt in einer Vorderansicht das Ausführungsbeispiel aus Fig. 1. Hierbei ist die dem Gehäuse 1 zugeordnete Streuscheibe 8 besonders gut erkennbar. Das Leuchtmittel 2 ist hinter der Streuscheibe 8 angeordnet.

Der Halter 4 weist ein bügelförmiges Element auf, das relativ zum Befestigungsmittel 9 drehbar ist. Hierdurch ist eine bedarfsgerechte Ausrichtung der Beleuchtungsvorrichtung ermöglicht.

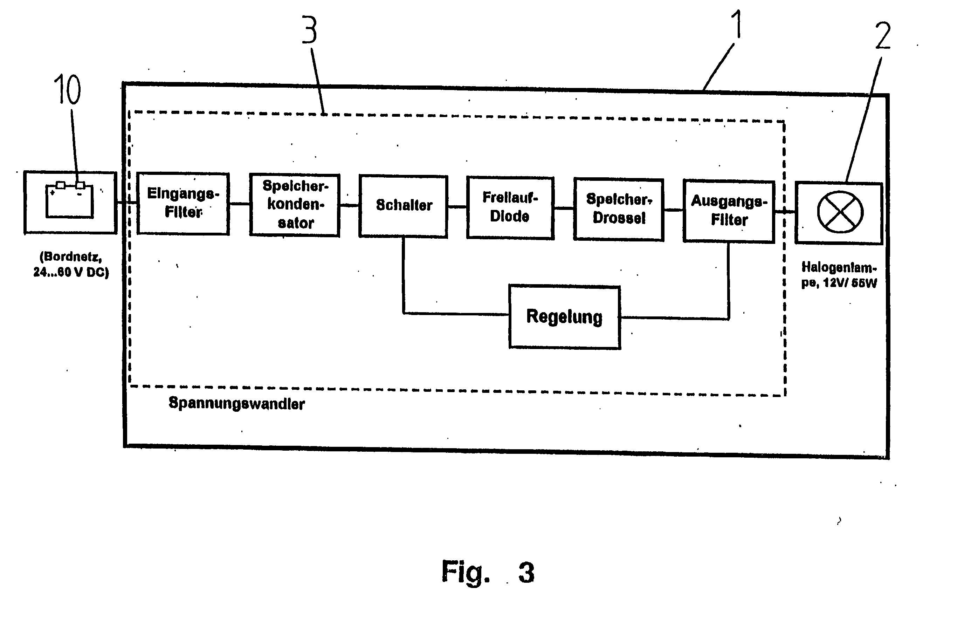

Fig. 3 zeigt in einem Blockschaltbild das Ausführungsbeispiel aus Fig. 1 mit integriertem Wandler 3. Der Wandler 3 ist in das Gehäuse 1 integriert und zwar im hinteren Bereich des Gehäuses 1. Das Leuchtmittel 2 ist eine mit 12 Volt Gleichspannung betreibbare Halogenlampe mit einer Leistung von 55 Watt. Das Leuchtmittel 2 ist im vorderen Bereich des Gehäuses angeordnet.

Das Bordnetz des Fahrzeugs weist eine Batterie 10 auf. Eine übliche durch das Bordnetz bereitgestellte Spannung ist eine Gleichspannung zwischen 24 und 60 Volt.

Hinsichtlich weiterer vorteilhafter Ausgestaltungen und Weiterbildungen der erfindungsgemäßen Beleuchtungsvorrichtung wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel einer erfindungsgemäßen Beleuchtungsvorrichtung lediglich zur Erörterung der beanspruchten Lehre dient, diese jedoch nicht auf das Ausführungsbeispiel einschränkt.

## Patentansprüche

1. Beleuchtungsvorrichtung, insbesondere zum Betrieb mit Niederspannung, mit einem Gehäuse (1), einem dem Gehäuse (1) zugeordneten Leuchtmittel (2) und einem mit dem Leuchtmittel (2) elektrisch verbundenen Wandler (3) zur Wandlung einer Eingangsspannung in eine Betriebsspannung des Leuchtmittels (2), wobei der Wandler (3) dem Gehäuse (1) zugeordnet und in dem Gehäuse (1) angeordnet ist, **dadurch gekennzeichnet, dass** der Wandler (3) mit dem Gehäuse (1) vergossen ist.

2. Beleuchtungsvorrichtung nach Anspruch 1, **dadurch gekennzeichnet, dass** der Wandler (3) dem hinteren, dem Leuchtmittel (2) abgewandten Bereich (5) des Gehäuses (1) zugeordnet ist.

3. Beleuchtungsvorrichtung nach Anspruch 1 oder 2, **dadurch gekennzeichnet, dass** der Wandler (3) ein Gleichspannungs-Gleichspannungs-Wandler und/oder ein Step-Down-Wandler ist und gegebenenfalls einen Eingangsfilter und/oder einen Speicherkondensator und/oder einen Schalter, vorzugsweise in Form eines Feldeffekt-Transistors und/oder eine Freilauf-Diode und/oder eine Speicherdrossel und/oder einen Ausgangsfilter und/oder eine Regelung aufweist.

4. Beleuchtungsvorrichtung nach einem der Ansprüche 1 bis 3, **dadurch gekennzeichnet, dass** die Eingangsspannung zwischen 24 und 60 Volt Gleichspannung beträgt, und/oder dass die Eingangsspannung kurzzeitig - bis zu einer Stunde - bis zu 90 Volt Gleichspannung betragen kann, wobei die Ausgangsspannung des Wandlers (3) 12,2 Volt Gleichspannung betragen kann.

5. Beleuchtungsvorrichtung nach einem der Ansprüche 1 bis 4, **dadurch gekennzeichnet, dass** eine Kühleinrichtung (6) vorgesehen ist, die vorzugsweise dem Gehäuse (1) zugeordnet ist und gegebenenfalls an den Wandler (3) angekoppelt ist, wobei die Kühleinrichtung die Kühleinrichtung (6) dem hinteren, dem Leuchtmittel (2) abgewandten Bereich (5) des Gehäuses (1) zugeordnet und gegebenenfalls in das Gehäuse (1), vorzugsweise das Gehäusehinterteil, integriert und als ein Kühlkörper, vorzugsweise als ein Rippenkühlkörper (7), ausgeführt sein kann.

6. Beleuchtungsvorrichtung nach einem der Ansprüche 1 bis 5, **dadurch gekennzeichnet, dass** das Gehäuse (1) einen Reflektor aufweist.

7. Beleuchtungsvorrichtung nach einem der Ansprüche 1 bis 6, **dadurch gekennzeichnet, dass** das Gehäuse (1) eine Streuscheibe (8) aufweist.

8. Beleuchtungsvorrichtung nach einem der Ansprüche 1 bis 7, **dadurch gekennzeichnet, dass** das Leuchtmittel (2) in dem Gehäuse (1) angeordnet ist.

9. Beleuchtungsvorrichtung nach einem der Ansprüche 1 bis 8, **dadurch gekennzeichnet, dass** das Leuchtmittel (2) mit 12 Volt Gleichspannung betreibbar ist.

10. Beleuchtungsvorrichtung nach einem der Ansprüche 1 bis 9, **dadurch gekennzeichnet, dass** das Leuchtmittel (2) eine Halogenleuchte ist.

## Claims

1. Lighting device, in particular for operation with low voltage, having a housing (1), a lighting means (2) which is associated with the housing (1) and a transformer (3), which is electrically connected to the lighting means (2), in order to transform an input voltage into an operating voltage of the lighting means (2), the transformer (3) being associated with the housing (1) and being arranged in the housing (1), **characterised in that** the transformer (3) is moulded with the housing (1).

2. Lighting device according to claim 1, **characterised in that** the transformer (3) is associated with the rear region (5) of the housing (1) that is remote from the lighting means (2).

3. Lighting device according to claim 1 or 2, **characterised in that** the transformer (3) is a direct voltage/direct voltage transformer and/or a step-down transformer and optionally has an input filter and/or a storage capacitor and/or a switch, preferably in the form of a field-effect transistor and/or a free-wheeling diode and/or a storage inductor and/or an output filter and/or a control.

4. Lighting device according to any one of claims 1 to 3, **characterised in that** the input voltage is between 24 and 60 volt DC and/or **in that** the input voltage can be temporarily - for up to one hour - up to 90 volt DC, the output voltage of the transformer (3) being able to be 12.2 volt DC.

5. Lighting device according to any one of claims 1 to 4, **characterised in that** there is provided a cooling device (6) which is preferably associated with the housing (1) and is optionally connected to the transformer (3), the cooling device (6) being able to be associated with the rear region (5) of the housing (1) that is remote from the lighting means (2) and optionally being able to be integrated in the housing (1), preferably the rear portion of the housing, and being able to be in the form of a cooling body, preferably a ribbed type cooling body (7).

6. Lighting device according to any one of claims 1 to 5, **characterised in that** the housing (1) has a reflector.

7. Lighting device according to any one of claims 1 to 6, **characterised in that** the housing (1) has a diffuser (8).

8. Lighting device according to any one of claims 1 to 7, **characterised in that** the lighting means (2) is arranged in the housing (1).

9. Lighting device according to any one of claims 1 to 8, **characterised in that** the lighting means (2) can be operated with 12 volt DC.

10. Lighting device according to any one of claims 1 to 9, **characterised in that** the lighting means (2) is a halogen lamp.

## Revendications

1. Dispositif d'éclairage, en particulier pour l'exploitation sous basse tension, avec un carter (1), un moyen d'éclairement (2) adjoint au carter (1) et un transformateur (3) relié électriquement avec le moyen d'éclairement (2) pour la transformation d'une tension d'entrée en une tension d'exploitation du moyen d'éclairement (2), le transformateur (3) étant adjoint au carter (1) et disposé dans le carter (1),
**caractérisé par le fait que** le transformateur est coulé avec le carter (1).

2. Dispositif d'éclairage selon la revendication 1,
**caractérisé par le fait que** le transformateur (3) est adjoint à la zone arrière (5), écartée du moyen d'éclairement (2), du carter (1).

3. Dispositif d'éclairage selon la revendication 1 ou 2,
**caractérisé par le fait que** le transformateur (3) est un transformateur tension continue - tension continue et/ou un transformateur abaisseur et présente le cas échéant un filtre d'entrée et/ou un condensateur de mémoire et/ou un commutateur, de préférence sous forme d'un transistor à effet de champ, et/ou une diode de roue libre et/ou une bobine de mémoire et/ou un filtre de sortie et/ou une régulation.

4. Dispositif selon l'une des revendications 1 à 4,
**caractérisé par le fait que** la tension d'entrée est une tension continue entre 24 et 60 volt et/ou que la tension d'entrée peut être égale pendant une courte durée - jusqu'à une heure - à une tension continue de 90 volt, la tension de départ du transformateur (3) pouvant être égale à une tension continue de 12,2 volt.

5. Dispositif d'éclairage selon l'une des revendications 1 à 4,
**caractérisé par le fait qu'**un dispositif de refroidissement (6) est prévu, lequel est de préférence adjoint au carter (1) et le cas échéant accouplé au transformateur (3), le dispositif de refroidissement (6) pouvant être adjoint à la zone arrière, écartée du moyen d'éclairement (2), du carter (1) et le cas échéant intégré dans le carter (1), de préférence la partie arrière du carter et réalisé sous la forme d'un refroidisseur, de préférence sous la forme d'un refroidisseur à ailettes.

6. Dispositif d'éclairage selon l'une des revendications 1 à 5,
**caractérisé par le fait que** le carter (1) présente un réflecteur.

7. Dispositif d'éclairage selon l'une des revendications 1 à 6,
**caractérisé par le fait que** le carter (1) présente un verre diffusant (8).

8. Dispositif d'éclairage selon l'une des revendications 1 à 7,
**caractérisé par le fait que** le moyen d'éclairement (2) est disposé dans le carter (1).

9. Dispositif d'éclairage selon l'une des revendications 1 à 8,
**caractérisé par le fait que** le moyen d'éclairement (2) peut être exploité avec une tension continue de 12 volt.

10. Dispositif d'éclairage selon l'une des revendications 1 à 9,
**caractérisé par le fait que** le moyen d'éclairement (2) est une lampe halogène.
